# EUROPEAN PATENT APPLICATION

(11) **EP 1 669 921 A2**
(43) Date of publication of application: **14.06.2006**
(21) Application number: 05257432.4
(22) Date of filing: 02.12.2005
(51) Int. Cl.: G06Q 10/00

(54) **Electronic money conversion apparatus**

(30) Priority: 03.12.2004 JP 2004351205
(71) Applicant: Sanden Corporation, Isesaki-shi, Gunma 372-8502 (JP)
(72) Inventor: Matsumoto, Naoto c/o Sanden Corporation, Isesaki-shi, Gunma 372-8502 (JP)
(74) Representative: Haley, Stephen

(57) **Abstract**

This invention includes an IC card reader/writer (50) which reads and writes data from and to an IC card (100), an input unit (20) for inputting the amount or the number of points to be converted, and a conversion processing unit (40) which subtracts the amount or the number to be converted input by the input unit (20) from the total amount of electronic money or the total number of points pertaining to the first service in the IC card (100), converts the amount or the number to be converted into an equivalent amount of electronic money or an equivalent number of points pertaining to the second service, and adds the equivalent amount or the equivalent number to the total amount of electronic money or the total number of points pertaining to the second service in the IC card (100).

## Description

The present invention relates to an electronic money conversion apparatus which converts electronic money or points among services of a plurality of types including an electronic money service and point service.

In these years, electronic money systems using an IC chip as an electronic wallet have been prevailing. Such an electronic money system uses a charger for charging an IC chip with cash as electronic money. As a conventional electronic money charger, there is known one described in Japanese Patent Publication 2003-36466. This electronic money charger comprises an IC card reader/writer, bill validator, wireless communication unit, and control unit. When a bill is inserted into the bill validator, the control unit increases the amount of electronic money in an IC card inserted into the IC card reader/writer by the amount of the inserted bill. The information on the increased amount of the electronic money is sent to a predetermined management server through the wireless communication unit. However, since a conventional electronic money charger handles cash, the device needs to have high robustness in terms of crime prevention. This increases the cost of the device.

Along with a recent increase in the density of IC chips, each IC chip is becoming compatible with a plurality of services. For example, the chip can store electronic money information pertaining to an electronic money service provided by Company A and that pertaining to an electronic money service provided by Company B. More specifically, the electronic moneys pertaining to the services of the companies are stored in the IC chip independently of each other. On the other hand, each of vending machines, POS systems, and the like is compatible only with any one of electronic money services, as it stands. Assume that a vending machine or the like one wants to use is compatible only with the service of Company B. In this case, even if the remaining amount of electronic money pertaining to the service of Company A is enough, the one can neither buy a product nor do other operations unless the remaining amount of electronic money pertaining to the service of Company B is enough. For this reason, there is demand for a transfer of electronic money between the services of the companies.

Such an IC chip is often used not only in electronic money services but also in point services. However, electronic money services and point services have been conventionally provided as independent services. Under the circumstances, there is demand for, e.g., conversion of accumulated points into electronic money and purchase of points for electronic money.

The present invention has as its object to provide an electronic money conversion apparatus which can convert electronic money or points among a plurality of services without handling cash.

To achieve the object, an electronic money conversion apparatus according to the present invention comprises a reader/writer device which reads and writes data from and to an IC chip storing data corresponding to a plurality of services, the data being one of electronic money used in an electronic money service and points used in a point service, input means for inputting one of a amount of electronic money and a number of points pertaining to a first service to be converted into one of electronic money and points pertaining to a second service, and conversion means for subtracting the one of the amount and the number to be converted input by the input means from one of a total amount of electronic money and a total number of points pertaining to the first service in the IC chip, converting the one of the amount and the number to be converted into one of an equivalent amount of electronic money and an equivalent number of points pertaining to the second service, and adding the one of the equivalent amount and the equivalent number to one of a total amount of the electronic money and a total number of the points pertaining to the second service in the IC chip.

According to the present invention, when a user inputs one of the amount and the number to be converted, the one of the amount and the number to be converted is subtracted from one of the total amount of the electronic money and the total number of the points pertaining to the first service stored in the IC chip. One of an equivalent amount and an equivalent number in the second service is calculated from the one of the amount and the number to be converted. And the one of the equivalent amount and the equivalent number is added to one of the total amount of the electronic money and the total number of the points pertaining to the second service stored in the IC chip. Accordingly, an increase in the amount of electronic money or the number of points can be implemented without using cash, and the device cost can be reduced. Also, since not only a transfer of electronic money between electronic money services and a transfer of points between point services but also conversion of electronic money or points between an electronic money service and a point service is allowed, the convenience is improved. Note that example of points in a point service include ones with various forms such as miles in a mileage service offered by, e.g., an airline.

Other objects, configurations, and effects of the present invention will be apparent from the following detailed description.

In the drawings
FIG. 1 is an external perspective view of an electronic money conversion apparatus;
FIG. 2 is a functional block diagram of the electronic money conversion apparatus;
FIG. 3 is a chart showing an example of the data structure of a conversion coefficient storage unit;
FIG. 4 is a chart showing an example of the data structure of a conversion log storage unit;
FIG. 5 is a diagram of the configuration of a network;
FIG. 6 is a diagram for explaining the memory space of an IC card;
FIG. 7 is a flowchart for explaining the operation of the electronic money conversion apparatus;
FIG. 8 is a chart showing an example of the data structure of a conversion coefficient storage unit;
FIG. 9 is a chart showing an example of the data structure of a conversion log storage unit; and
FIG. 10 is a diagram for explaining the memory space of an IC card.

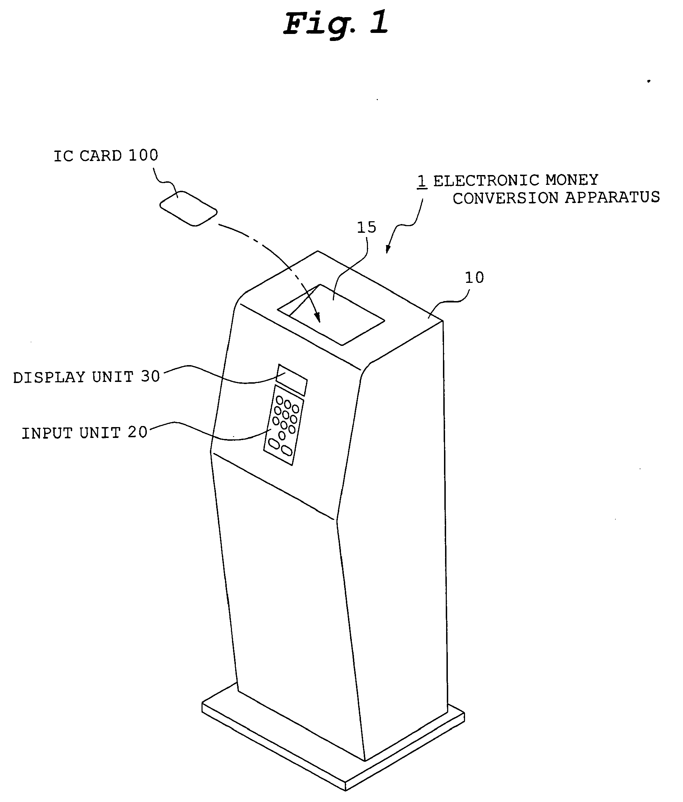

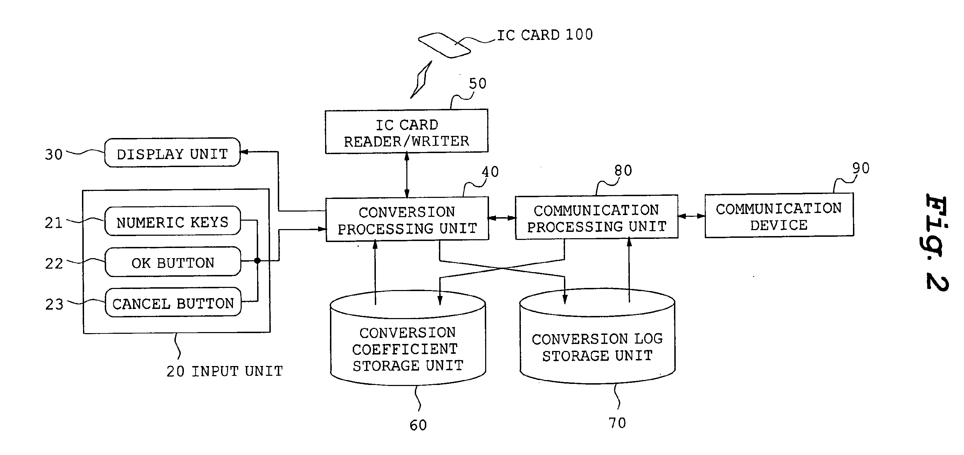

An electronic money conversion apparatus according to an embodiment of the present invention will be explained with reference to the views. FIG. 1 is an external perspective view of the electronic money conversion apparatus; and FIG. 2, a function block diagram of the electronic money conversion apparatus.

This embodiment will explain a case wherein an IC card 100 functions as an electronic wallet for a plurality of (in this embodiment, two) electronic money services. An electronic money conversion apparatus 1 converts between electronic money in a first electronic money service and electronic money in a second electronic money service, both stored in the IC card 100. The electronic money conversion apparatus 1 will be described in detail below.

As shown in FIG. 1, the electronic money conversion apparatus 1 comprises, on the front of a housing 10 in the shape of a vertically long box, an input unit 20 composed of an LCD indicator or the like for a user to input an amount to be converted and a display unit 30 for displaying various types of messages to the user. A recess 15 is formed in the upper surface of the housing 10 to receive the IC card 100. An antenna for a non-contact IC card reader/writer (to be described later) is arranged in the recess 15.

As shown in FIG. 2, the electronic money conversion apparatus 1 comprises the input unit 20 and display unit 30, a conversion processing unit 40 which performs electronic money conversion processing, an IC card reader/writer 50 which reads and writes data from and to the IC card 100 in a non-contact manner, a conversion coefficient storage unit 60 which stores conversion coefficients between electronic moneys used in the conversion processing, a conversion log storage unit 70 which stores a record (log) of the conversion processing, a communication processing unit 80 which communicates with various types of management servers over a network, and a communication device 90 for network connection such as a router or modem.

The input unit 20 comprises numeric keys 21 for inputting a numeric value such as an amount to be converted, an OK button 22 for inputting an intention to confirm an OK, and a cancel button 23 for inputting an intention to make a cancellation.

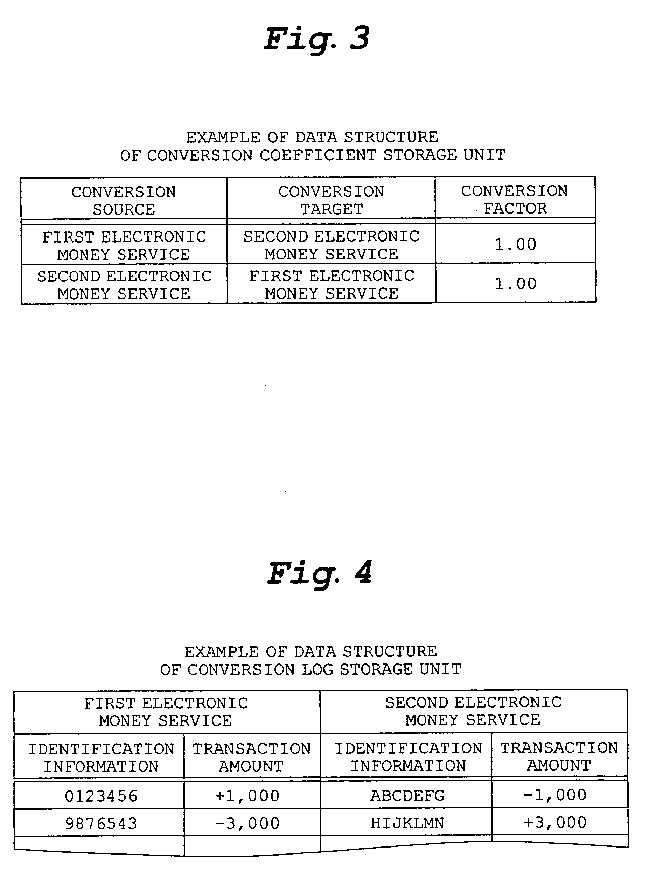

The conversion processing unit 40 calculates an equivalent amount by multiplying an amount to be converted input with the input unit 20 by a conversion coefficient stored in the conversion coefficient storage unit 60. The conversion processing unit 40 controls the IC card reader/writer 50 so as to subtract the amount to be converted from the remaining amount of electronic money for a conversion source electronic money service and add an equivalent amount to the remaining amount of electronic money for a conversion target electronic money service. FIG. 3 shows an example of the data structure of the conversion coefficient storage unit 60. As shown in FIG. 3, the conversion coefficient storage unit 60 stores a conversion source electronic money service and conversion target electronic money service and a conversion coefficient for them. Accordingly, as will be described later, adoption of a value less than 1.00 as a conversion coefficient makes it possible to collect, as a commission, the amount of difference between an amount to be converted and an equivalent amount. A conversion coefficient can be used as a currency conversion coefficient when electronic money services adopt different currency units. In this embodiment, conversion coefficients between electronic money services are set to 1.00.

After the conversion processing unit 40 performs electronic money conversion processing, it accumulates a record of a transaction for each electronic money service in the conversion log storage unit 70. FIG. 4 shows an example of the data structure of the conversion log storage unit 70. As shown in FIG. 4, for each electronic money service, identification information used in the electronic money service and the amount of a corresponding transaction are stored in the conversion log storage unit 70. Identification information is stored in the IC card 100, as will be described later.

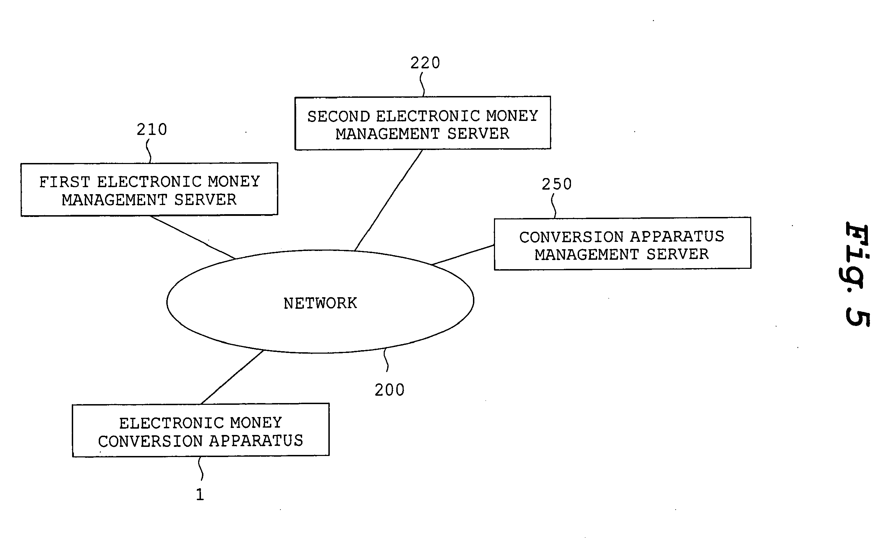

The communication processing unit 80 will be explained with reference to a network configuration diagram in FIG. 5. The electronic money conversion apparatus 1 is capable of communicating with a first electronic money management server 210, a second electronic money management server 220, and a conversion apparatus management server 250 through the communication device 90 and a network 200. The first electronic money management server 210 manages electronic money in the first electronic money service. The second electronic money management server 220 manages electronic money in the second electronic service. The conversion apparatus management server 250 manages the electronic money conversion apparatus 1.

The communication processing unit 80 of the electronic money conversion apparatus 1 connects to the conversion apparatus management server 250 regularly or at an arbitrary time, receives a conversion coefficient from the conversion apparatus management server 250, and stores the conversion coefficient in the conversion coefficient storage unit 60. The communication processing unit 80 connects to the electronic money management servers 210 and 220 regularly or at an arbitrary time and sends them electronic money transaction information stored in the conversion log storage unit 70.

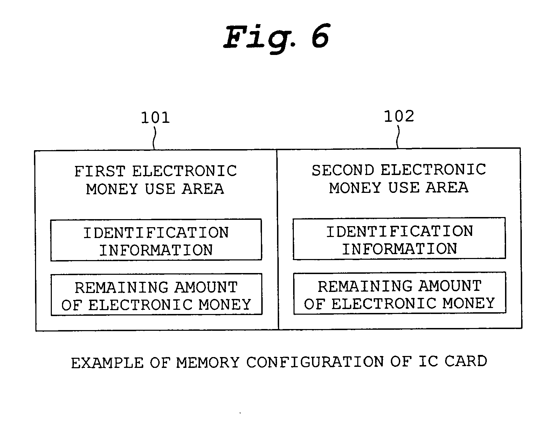

An IC chip from and to which data can be read and written in a non-contact manner is embedded in the IC card 100 used in this embodiment. The memory space of the IC chip is divided into a plurality of (two in FIG. 6) storage areas, as shown in FIG. 6. In this embodiment, the memory space is divided into a first electronic money service use area 101 and a second electronic money service use area 102. Each of the areas 101 and 102 stores identification information and the remaining amount of electronic money in the corresponding electronic money service.

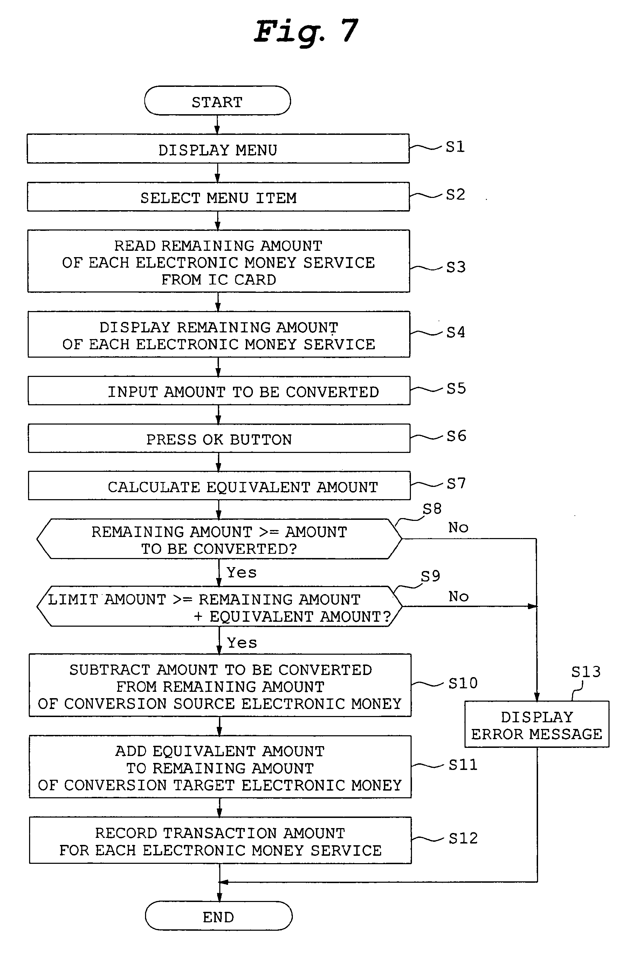

The operation of the electronic money conversion apparatus will be explained with reference to a flowchart in FIG. 7. As shown in FIG. 7, the conversion processing unit 40 of the electronic money conversion apparatus 1 first displays a menu on the display unit 30 to select conversion source and target electronic money services (step S1). For example, a menu saying "1) First Electronic Money Service to Second Electronic Money Service 2) Second Electronic Money Service to First Electronic Money Service" is displayed. When a user selects either one with the numeric keys 21 or the like (step S2), the conversion processing unit 40 reads, with the IC card reader/writer 50, identification information and a remaining amount pertaining to each electronic money service stored in the IC card 100 (step S3) and displays the remaining amount on the display unit 30 (step S4). When the user inputs an amount to be converted with the numeric keys 21 of the input unit 20 (step S5) and presses the OK button 22 (step S6), the conversion processing unit 40 calculates an equivalent amount to be added to the conversion target electronic money service from the input amount to be converted (step S7). More specifically, a conversion coefficient is acquired from the conversion coefficient storage unit 60 on the basis of the result of the selection in step S2, and the equivalent amount is obtained by multiplying the input amount to be converted by the conversion coefficient.

The conversion processing unit 40 confirms whether the remaining amount of electronic money of the conversion source is equal to or more than the input amount to be converted and whether "the equivalent amount + the remaining amount of electronic money of the conversion target" falls at or below the upper limit amount of the conversion target electronic money service (steps S8 and S9). If both the conditions are met, the conversion processing unit 40 controls the IC card reader/writer 50 so as to subtract the amount to be converted from the remaining amount of the electronic money of the conversion source (step S10) and add the equivalent amount to the remaining amount of the electronic money of the conversion target (step S11) . After that, the conversion processing unit 40 records the amount of a transaction for each electronic money service in the conversion log storage unit 70 (step S12). If either one of the conditions in steps S8 and S9 is not met, an error message is displayed on the display unit 30, and the process ends (step S13).

Although not shown in FIG. 7, if the cancel button 23 is pressed at the time of inputting the amount to be converted or if reading and writing of data from and to the IC card 100 is unsuccessful, it is advisable to display an error message on the display unit 30, as needed, and interrupt the process.

According to this electronic money conversion apparatus, electronic money pertaining to a certain electronic money service stored in the IC card 100 is converted into electronic money pertaining to another electronic money service by an amount to be converted input by a user. More specifically, since the remaining amount of electronic money stored in the IC card 100 can be increased without using cash, the convenience is improved.

### (Second Embodiment)

An electronic money conversion apparatus according to a second embodiment of the present invention will be explained. This embodiment is different from the first embodiment in that a commission can be collected in conversion processing. Since others, i.e., the configuration, operation, and the like are the same as those in the first embodiment, only differences will be explained here.

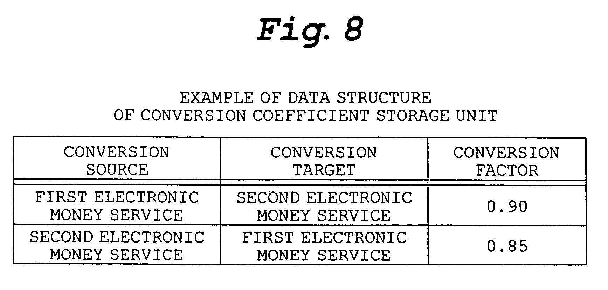

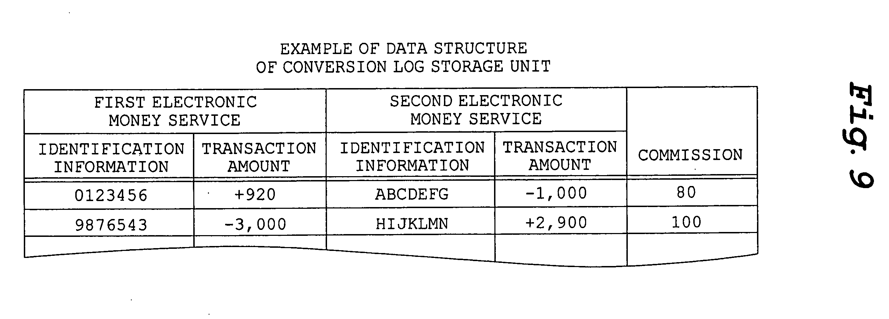

An electronic money conversion apparatus 1 according to this embodiment stores conversion coefficients of less than 1.0 in a conversion coefficient storage unit 60 for conversion in the same currency unit, as shown in FIG. 8. After a conversion processing unit 40 calculates an equivalent amount by multiplying an amount to be converted by a conversion coefficient. The conversion processing unit 40 calculates, as a commission, the amount of difference between the amount to be converted and the equivalent amount. The conversion processing unit 40 stores the amount of the commission in a conversion log storage unit 70. FIG. 9 shows an example of the data structure of the conversion log storage unit 70. A communication processing unit 80 sends a record of the commission stored in the conversion log storage unit 70 to a conversion apparatus management server 250 regularly or at an arbitrary time.

According to this electronic money conversion apparatus, electronic money pertaining to one electronic money service stored in an IC card 100 is converted into electronic money pertaining to another electronic money service after a commission of a predetermined rate is subtracted from an amount to be converted input by a user. Since this commission information can be managed by the conversion apparatus management server 250, it becomes possible to launch a business which performs conversion processing as a service. The operation and effect are the same as those in the first embodiment.

In this embodiment, the amount of difference between the amount to be converted and the equivalent amount is calculated as a commission by using the value of less than 1.0 as the conversion coefficient. However, the equivalent amount may be calculated by defining a fixed commission and subtracting the commission from an amount to be converted. In this case, the commission may be so set as to change stepwise according to the amount to be converted. Alternatively, both of a conversion coefficient of less than 1.0 and a fixed commission may be adopted.

### (Third Embodiment)

An electronic money conversion apparatus according to a third embodiment of the present invention will be explained. This embodiment is different from the first and second embodiments in that user authentication is performed prior to conversion processing. Since others, i.e., the configuration, operation, and the like are the same as those in the first and second embodiments, only differences will be explained here.

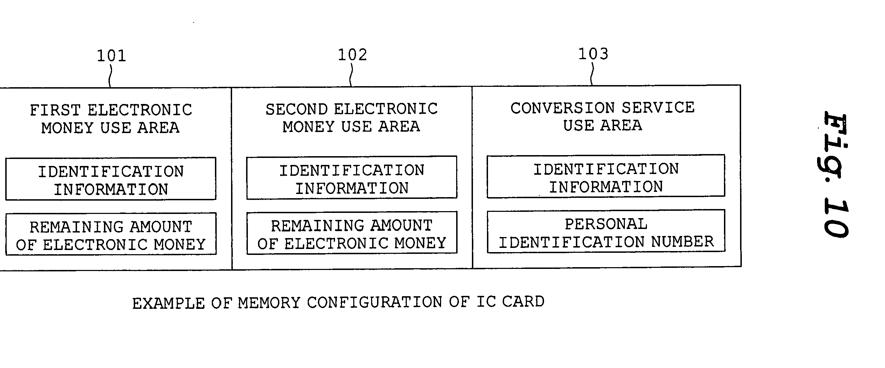

The memory space of an IC card 100 used in this embodiment is divided into first and second electronic money service use areas 101 and 102 and an electronic service conversion service use area 103, as shown in FIG. 10. The identification information and personal identification number of a user who uses the electronic money conversion service are stored in the conversion service use area 103. A conversion processing unit 40 of an electronic money conversion apparatus 1 performs authentication processing for a user prior to provision of an electronic money conversion service. More specifically, when a user inputs his/her personal identification number to an input unit 20, the conversion processing unit 40 determines whether the input personal identification number coincides with a personal identification number read from the IC card 100. The conversion processing unit 40 performs the electronic money conversion service only if the personal identification numbers coincide with each other. The conversion processing unit 40 preferably records the identification information of the user read from the IC card 100 as needed when recording a conversion log in a conversion log storage unit 70.

According to this electronic money conversion apparatus, an electronic money conversion service can be provided only to a specific user, and a user having used the electronic money conversion apparatus can be specified. Thus, the electronic money conversion apparatus is useful in terms of marketing strategy such as user retention.

The embodiments of the present invention have been described in detail above. The present invention, however, is not limited to these. The scope of the present invention is defined by the claims, and all modifications that fall within the meanings of the claims are included in the present invention. Modifications will be shown below.

The embodiments have explained the IC card 100 compatible with two electronic money services. However, the number of services may be any number, and the present invention can also be applied to a case wherein the IC card 100 is compatible with three or more electronic money services.

Also, the embodiments have explained conversion from electronic money of a certain electronic money service into that of another electronic money service. However, the present invention can be applied to point services, in addition to electronic money services. Note that examples of points in a point service include ones with various forms such as miles in a mileage service offered by, e.g., an airline. More specifically, points in a certain point service may be converted into points in another point service. Alternatively, electronic money in an electronic money service may be converted into points in a point service, and vice versa. Conversion from miles in a mileage service into electronic money in an electronic money service is taken as an example.

Additionally, in the embodiments, the non-contact IC card 100 is placed on the upper surface of the housing 10, thereby allowing communication between the IC card 100 and the IC card reader/writer 50. With this configuration, if a user takes away the IC card 100 during electronic money conversion processing, it becomes impossible to continue normal processing. Under the circumstances, the IC card reader/writer 50 and the like are preferably configured such that the IC card 100 cannot be removed while the IC card reader/writer 50 and the IC card 100 are communicating with each other. For example, it is advisable to configure the housing 10 such that the IC card 100 is inserted through a predetermined insertion slot and provide a mechanism for ejecting the IC card 100.

Moreover, the embodiments have explained the IC card 100 with the embedded non-contact IC chip. Such a non-contact IC chip can be mounted in various devices and objects. Examples of the devices and objects include mobile phones, watches, PDAs, personal computers, bracelets, rings, earrings, and the like.

Furthermore, the embodiments each use a non-contact IC chip as a medium which stores electronic money of an electronic money service or points of a point service. The present invention can also be applied to a contact IC chip.

## Claims

1. An electronic money conversion apparatus comprising:
a reader/writer device (50) which reads and writes data from and to an IC chip (100) storing data corresponding to a plurality of services, the data being one of electronic money used in an electronic money service and points used in a point service;
input means (20) for inputting one of an amount of electronic money and a number of points pertaining to a first service to be converted into a second service; and
conversion means (40) for subtracting the one of the amount and the number to be converted input by said input means from one of a total amount of electronic money and a total number of points pertaining to the first service in the IC chip (100), converting the one of the amount and the number to be converted into one of an equivalent amount of electronic money and an equivalent number of points pertaining to the second service, and adding the one of the equivalent amount and the equivalent number to one of a total amount of the electronic money and a total number of the points pertaining to the second service in the IC chip (100).

2. The electronic money conversion apparatus according to claim 1, further comprising:
a communication device (90) for network connection; and
communication processing means (80) for sending one of subtraction information and addition information to a management server (210, 220) via said communication device (90).

3. The electronic money conversion apparatus according to claim 1, further comprising
storage means (60) for storing a conversion coefficient from the first service into the second service, wherein
said conversion means (40) calculates the one of the equivalent amount and the equivalent number pertaining to the second service by multiplying the one of the amount and the number pertaining to the first service to be converted by the conversion coefficient.

4. The electronic money conversion apparatus according to claim 3, further comprising:
a communication device (90) for network connection; and
communication processing means (80) for receiving the conversion coefficient from a management server (250) via said communication device (90) and storing the conversion coefficient in said storage means (60).

5. The electronic money conversion apparatus according to claim 1, wherein
said conversion means (40) subtracts a predetermined commission from the one of the total amount of the electronic money and the total number of the points pertaining to the first service or the second service stored in the IC chip (100) upon each conversion.

6. The electronic money conversion apparatus according to claim 5, further comprising:
a communication device (90) for network connection; and
communication processing means (40) for sending information of subtraction of the commission to a management server (250) via said communication device (90).
